# EUROPÄISCHE PATENTSCHRIFT

(11) **EP 1 055 696 B1**
(45) Veröffentlichungstag und Bekanntmachung des Hinweises auf die Patenterteilung: **19.10.2005**
(21) Anmeldenummer: 00109754.2
(22) Anmeldetag: 09.05.2000
(51) Int. Cl.: C08J 3/215, C08K 9/06, C08L 21/00

(54) **Kautschukpulver, die hohe Mengen an Füllstoffen enthalten, Verfahren zu ihrer Herstellung und Verwendung**
Rubber powder containing high levels of fillers, method for the production and use thereof
Poudre de caoutchouc contenant de grandes quantités de charges, son procédé de production et son utilisation

(30) Priorität: 27.05.1999 DE 19924366
(43) Veröffentlichungstag der Anmeldung: 29.11.2000
(73) Patentinhaber: PKU Pulverkautschuk Union GmbH, 45764 Marl (DE)
(72) Erfinder: Görl, Udo, Dr., 45657 Recklinghausen (DE); Trempler, Thomas, 63477 Maintal (DE); Stober, Reinhard, Dr., 63594 Hasselroth (DE); Ernst, Uwe, 45768 Marl (DE)

(56) Entgegenhaltungen:
- DE-A- 3 723 213
- DE-A- 3 723 214
- GOERL U ET AL: "RUBBER/FILLER BATCHES IN POWDER FORM" KAUTSCHUK UND GUMMI - KUNSTSTOFFE,DE,DR. ALFRED HUTHIG VERLAG GMBH. HEIDELBERG, Bd. 51, Nr. 4, 1. April 1998 (1998-04-01), Seiten 250-252,254-25, XP000766423 ISSN: 0948-3276

## Beschreibung

Die Erfindung betrifft ein Verfahren zur Herstellung von Kautschukpulvern, die mit Organosiliciumverbindungen modifizierte silikatische Füllstoffe und/oder Ruß in hohen Mengen enthalten, die so hergestellten Kautschukpulver und deren Verwendung.

Die Herstellung von geringe Mengen Füllstoffe enthaltenden Pulverkautschuken (Kautschukpulvern) ist im Prinzip bereits bekannt (DE-PS 37 23 213, DE 37 23 214, und DE-198 43 301). Diese Produkte werden im allgemeinen über eine stufenweise Fällung aus einer Füllstoff (u.a. gefällte Kieselsäure) und Kautschuk-Latex enthaltenden wäßrigen Emulsion gewonnen.

In diesen Produkten soll der Kautschuk den Hauptanteil oder zumindest den wesentlichen Anteil im Vergleich zum Füllstoff (z. B. Kieselsäure und/oder Ruß) bilden. Die Füllstoffmenge wird bevorzugt so gewählt, daß sie der Konzentration in einer üblichen Gummimischung entspricht.

Das Interesse an diesen pulverförmigen Produkten dieses Typs ergibt sich aus der Verarbeitungstechnik in der Gummiindustrie. Dort werden die Kautschukmischungen mit einem hohen Aufwand an Zeit, Energie und Personal hergestellt. Der Hauptgrund hierfür ist, daß der Rohstoff Kautschuk ballenförmig vorliegt und die weiteren Bestandteile der vulkanisierbaren Mischungen auf Walzen oder Innenmischern in mehreren Verfahrensstufen zugemischt werden müssen.

Durch den Einsatz von hochaktiven gefällten Kieselsäuren in Kombination mit bifunktionellen Organosilanen in Laufflächenmischungen seit Beginn der neunziger Jahre können Rollwiderstand (Benzineinsparung) und Naßrutschverhalten verbessert werden. [DE-OS 43 34 201.9 und DE-OS 44 27 137.9].

Bis-(triethoxysilylpropyl)tetrasulfan (TESPT) stellt dabei den wichtigsten Vertreter in dieser Anwendung dar.

TESPT reagiert über seine Triethoxysilylgruppen während der Mischungsherstellung mit den Silanolgruppen der Kieselsäure.

Bei dieser sogenannten Silanisierungs- oder Modifizierungsreaktion wird Ethanol in stöchiometrischen Mengen freigesetzt, was erheblich Sicherheitsvorkehrungen am Arbeitsplatz erfordern kann, wenn diese Reaktion erst bei der Herstellung der Kautschukmischungen abläuft.

Die Gummiindustrie ist daher bemüht, innerhalb der nächsten Jahre Abhilfe zu schaffen. Eine Möglichkeit besteht in der Einrichtung von Absaug- und Nachverbrennungsanlagen oder im Einbau von Biofiltern. Da dies für jede Kneterlinie erfolgen muß, sind die Kosten entsprechend hoch. Eine zweite Möglichkeit besteht darin, daß die Rohstofflieferanten die Silanisierungsreaktion, d. h. die Umsetzung zwischen Kieselsäure und Silan durchführen, den freiwerdenden Alkohol sammeln und entsorgen bzw. der Wiederverwertung zuführen.

Verfahren zur Modifizierung von silikatischen Füllstoffen, u.a. gefällten hochaktiven Kieselsäuren, sind in der Literatur bekannt. Keines dieser Produkte hat sich jedoch aus ökonomischen, aber vor allen Dingen auch aus technischen Gründen am Markt durchgesetzt.

Die EP 0 442 1433 B1 betrifft ein Verfahren, bei dem das Silan auf die getrocknete Kieselsäure aufgebracht und anschließend bei erhöhter Temperatur unter Ethanolabspaltung umgesetzt wird. Neben dem ökonomischen Nachteil, eine bereits getrocknete Kieselsäure als Ausgangsmaterial einzusetzen, liegt ein zusätzlicher Nachteil in der unzureichenden Lagerstabilität der so hergestellten Produkte und einer damit einhergehenden Verschlechterung der gummitechnischen Werte.

Eine weitere Möglichkeit, vormodifizierte Kieselsäure herzustellen, stellt die Naßsilanisierung dar. Die EP 0 177 674 betrifft ein Verfahren, bei dem man unter Zuhilfenahme spezieller Emulgatoren Kieselsäure und Silan homogenisiert und anschließend bei erhöhter Temperatur die Umsetzung bei gleichzeitiger Trocknung des Produktes durchführt. In der US-PS 3 567 680 werden speziell wasserlösliche Merkaptosilane als für die Umsetzung geeignet beschrieben.

Im KGK Journal [GOERL U ET AL: "RUBBER/FILLER BATCHES IN POWDER FORM" KAUTSCHUK UND GUMMI - KUNSTSTOFFE, DE, DR. ALFRED HUTHIG VERLAG GMBH, HEIDELBERG, Bd. 51, Nr. 4, 1. April 1998 (1998-04-01), Seiten 250-252, 254-25] wird Pulverkautschuk beschrieben, der modifizierte Kieselsäure enthält.

Die Kombination von Kieselsäure und Organosilanen ist dabei Stand der Technik. Bei der Silanisierung treten jedoch zahlreiche Probleme auf, die das gummitechnische Wertebild verschlechtern.

So neigt das Silan bei niedrigen pH-Werten zur Eigenpolymerisation.

Im Falle der Silanisierung in Wasser kann es dazu kommen, dass die Kieselsäureteilchen im Wasser stark agglomerieren und daher gerade bei hoher Suspensionsdichte nicht in der für die Silanisierung geeigneten Teilchengröße vorliegen.
Mischt man derartig vormodifizierte Produkte ein, kommt es zum mechanischen Abbau der Teilchen und der Freilegung von Kieselsäureteilchen, die nicht oder nur unzureichend modifiziert wurden.

Wie die Praxis zeigt, sind jedoch auch nach diesen Verfahren hergestellte Produkte nicht sehr lagerstabil. Untersuchungen haben gezeigt, daß sich TESPT in beiden Verfahren, insbesondere bei hohen Einsatzmengen nur schwer vollständig mit den OH-Gruppen der Kieselsäureoberfläche umsetzen läßt. Dieser nicht umgesetzte Silanteil neigt im Laufe der Lagerung zur Eigenpolymerisation und dient dann nicht mehr der gewünschten Modifizierung der Kieselsäure. In der Folge fällt das gummitechnische Wertebild ab. Im Falle der Silanisierung in Wasser gemäß EP 0 177 674 kommt hinzu, daß Kieselsäureteilchen im Wasser stark agglomerieren und daher gerade bei hoher Suspensionsdichte nicht in der für die Silanisierung geeigneten Teilchengröße vorliegen. Mischt man derartig vormodifizierte Produkte ein, kommt es zum mechanischen Abbau der Teilchen und der Freilegung von Kieselsäureteilchen, die nicht oder nur unzureichend modifiziert wurden. Die Folge ist ein deutlicher Abfall der Eigenschaften im gummitechnischen Wertebild.

Die Tatsache, daß nicht umgesetzte Silananteile eine Ursache für das Alterungsverhalten von silanisierten, speziell mit TESPT silanisierten Kieselsäuren darstellen, macht einen weiteren neuen Ansatz zur Herstellung vormodifizierter Produkte verständlich. In DE 196 09 619.7 wird der Versuch unternommen, den Reaktionsgrad des Silans, u.a. TESPT, deutlich zu erhöhen, d.h. möglichst viele Ethoxygruppen umzusetzen. Möglich wird dies durch die Absenkung des pH-Wertes in einen Bereich zwischen 2 - 5. Bei diesen pH-Werten erfolgt eine schnelle und umfassende Reaktion des Silans mit der Kieselsäure.

Wie die Praxis jedoch zeigt, neigt das Silan bei niedrigen pH-Werten zur Eigenpolymerisation. Das führt dazu, daß die Kieselsäure nicht in der gewünschten Weise modifiziert wird und deswegen das gummitechnische Wertebild unbefriedigend ist.

Zusammengefaßt bestehen folgende Probleme, die insbesondere in ihrer Gesamtheit vermieden bzw. gelöst werden sollen.
- Reduzierung des Agglomerationsverhaltens der Kieselsäure bei der Silanisierung
- Vermeidung der Eigenpolymerisation des Silans
- Vollständige Umsetzung des Silans mit der silikatischen Oberfläche

Aufgabe der Erfindung ist es, ein Verfahren zur Herstellung eines Kautschukpulvers bereitzustellen, das Füllstoffe, insbesondere gefällte Kieselsäuren, allein oder in Kombination mit Ruß, mit sehr hohem Füllgrad enthält, diese Pulver und ihre Verwendung.

Gegenstand der Erfindung ist ein Verfahren zur Herstellung feinteiliger Kautschuke (Kautschukpulver) durch Ausfällen aus wasserhaltigen Mischungen, die oxidische, insbesondere silikatische Füllstoffe allein oder in Kombination mit Ruß in Form von Suspensionen, eine wässrige Emulsion eines Kautschuks (Polymers) oder eine Kautschuklösung enthalten, durch Zusatz von wasserlöslichen Salzen eines Metalls, ausgewählt aus den Gruppen II a, II b, III a und VIII des periodischen Systems der Elemente, das dadurch gekennzeichnet ist, daß man
a) zunächst aus einer silikatischen Verbindung allein oder in kombination mit Ruß und Wasser eine Füllstoffsuspension mit einer Suspensionsdichte zwischen 0,5 - 10%, insbesondere zwischen 5 - 7 % bezogen auf den Feststoff, unter Rühren herstellt, gegebenenfalls die Feststoffteilchen zuvor mittels eines geeigneten Mahlwerkes heruntermahlt (deagglomeriert), gegebenenfalls zusätzlich wasserstoffbrückenbildende Verbindungen wie Polyalkohole oder polyvalente Amine in Mengen von 0,5 - 10 Teilen, bezogen auf 100 Teile des Füllstoffs, zur Suspension hinzufügt, und gegebenenfalls die Suspension auf Temperaturen im Bereich zwischen 25 - 95 °C erwärmt,
b) anschließend, wenn die Suspension silikatische Füllstoffe enthält, eine oder mehrere Organosiliciumverbindung(en) gemäß den Formeln (I) bis (III), die mindestens eine Alkoxygruppe enthalten, in Wasser gelöst oder gegebenenfalls in Anwesenheit einer oberflächenaktiven Substanz in Wasser emulgiert, mit der genannten wässrigen Suspension des Füllstoffs oder dessen Mischung mit einem Ruß bei einer Temperatur von 10 bis 60 °C, bevorzugt bei Raumtemperatur, unter Rühren vermischt,
c) diese so hergestellte Suspension mit dem Polymerlatex, der Polymeremulsion oder der Polymerlösung vermischt, den pH-Wert dieser Mischung mit einer Säure oder der wäßrigen Lösung eines der oben genannten Salze, insbesondere einer Lewissäure, auf einen pH-Wert von 7 bis 4, bevorzugt zwischen 6,5 bis 4,5 absenkt und den in der Mischung befindlichen Kautschuk zusammen mit den gegebenenfalls durch die genannten Organosiliciumverbindungen modifizierten Füllstoffen ausfällt.
d) den ausgefallenen Feststoff mit an sich bekannten Maßnahmen abtrennt und
e) den füllstoffhaltigen Kautschuk trocknet.

Es ist auch möglich, mit den genannten Organosiliciumverbindungen bereits vormodifizierte silikatische Füllstoffe einzusetzen.

Als Polyole werden bevorzugt Hexantriol, Glykol, Diethylenglykol, Triethylenglykol oder Polywax 4000 (langkettige Kohlenwasserstoffe)eingesetzt. Als polyvalente Amine sind beispielsweise o-Tolyl-biguanidin, Hexa K, DOTG (Di-o-tolylguanidin), DPG (Diphenylguanidin) oder TEA (Triethanolamin) geeignet.

In einer besonderen Ausführungsform setzt man den so hergestellten, sich in wässrigem Medium befindlichen Pulverkautschuk vor der Abtrennung und Trocknung zusätzlich eine wässrige Kunststoffemulsion enthaltend Polystyrol, Polystyrolbutadiencopolymere unterschiedlicher Zusammensetzung, Polyethylene, Polypropylene oder Polyvinylacetat unterschiedlicher chemischer Konstitution in Mengen von 0,5 - 10 phr, insbesondere 1 - 4 phr zu. Diese bildet bei der Trocknung einen die Wasseraufnahme behindernden Überzug.

Die Mengenverhältnisse in der Suspension werden so eingestellt, daß ein Pulverkautschuk mit einem Füllstoffgehalt > 250 phr, bevorzugt ≥ 400 phr ausfällt.

Die Trocknung erfolgt vorteilhaft in einem Trockner bei einer Gaseintrittstemperatur von 130 bis 170 °C und einer Gasaustrittstemperatur von 50 bis 70 °C. Die Temperatur des Produktes sollte 40 bis 80°C nicht überschreiten. Die von dem pH-Wert und dem Füllstoffgehalt abhängige Dauer und der Umfang des Ausfällvorgangs kann innerhalb einer Meßreihe einfach festgestellt werden.

Die Produkte fallen ohne weitere zusätzliche Maßnahmen zur Verhinderung des Klebens als freifließende Pulver an. Die quantitative Bestimmung der im Silan gemäß Formel (I) enthaltenen Schwefelatome vor und nach Extraktion des Pulverkautschuks mit heißem Ether zeigt beispielsweise, daß das zur Modifizierung eingesetzte Silan praktisch vollständig chemisch gebunden auf der Kieselsäure vorliegt.

Als weitere Füllstoffe setzt man gegebenenfalls die aus der Gummiindustrie bekannten Ruße, bevorzugt in feinteiliger Form (Fluffy) ein, die im allgemeinen ohne mechanische Behandlung einen mittleren Korngrößendurchmesser von 1 bis 9 µm, vorzugsweise 1 bis 8 µm aufweisen, bevor sie suspensiert sind.

Gefällte Kieselsäure kann vorteilhaft in Form eines salzfrei gewaschenen Filterkuchens eingesetzt werden.

Als Metallsalze kommen solche in Frage, die von Elementen der Gruppen IIa, IIb, IIIa, und VIII des periodischen Systems der Elemente stammen. Diese Gruppeneinteilung entspricht der alten IUPAC-Empfehlung (siehe Periodisches System der Elemente, Verlag Chemie, Weinheim, 1985). Typische Vertreter sind Magnesiumchlorid, Zinksulfat, Aluminiumchlorid, Aluminiumsulfat, Eisenchlorid, Eisensulfat, Kobaltnitrat und Nickelsulfat, wobei die Salze des Aluminiums bevorzugt sind. Besonders bevorzugt sind Aluminiumsulfat und weitere Lewissäuren. Die Salze werden in einer Menge von 0,1 bis 6,5 Gewichtsteilen pro 100 Gewichtsteile Kautschuk eingesetzt.

Zur Einstellung des gewünschten pH-Wertes verwendet man gegebenenfalls zusätzlich Mineralsäuren, wie z.B. Schwefelsäure, Phosphorsäure und Salzsäure, wobei die Schwefelsäure besonders bevorzugt ist. Eingesetzt werden können aber auch Carbonsäuren, wie z.B. Ameisen- und Essigsäure.

Die Menge an Säure richtet sich nach Art und Menge des wasserlöslichen Metallsalzes, des Füllstoffs, des eingesetzten Organosilans, des Kautschuks und des gegebenenfalls vorhandenen Alkalisilikats. Sie läßt sich durch einige orientierende Versuche leicht ermitteln. Der Feststoffgehalt der eingesetzten Latices beläuft sich im allgemeinen auf 20 bis 25 Gew.-%. Der Feststoffgehalt der Kautschuklösungen beträgt im allgemeinen 3 bis 20 Gew.-%, der der Kautschukemulsionen im allgemeinen 5 bis 60 Gew.-%.

Das erfindungsgemäße Verfahren kann sowohl diskontinuierlich als auch kontinuierlich durchgeführt werden. Das ausgefällte Kautschukpulver wird vorteilhaft zunächst vom größten Teil des Wassers abgetrennt. Das kann z.B. durch eine Zentrifuge, eine Filterpresse oder einen Dekanter erfolgen. Anschließend wird das Produkt auf einen Restfeuchtegehalt von < 1 % getrocknet. Dies erfolgt vorteilhaft mit einem Kurzzeittrockenverfahren zum Beispiel einem Wirbelbetttrockner. Es ist jedoch auch möglich, das gefällte Kautschukpulver direkt einem Trockner z.B. einem Spühtrockner ohne vorherige Wasserabtrennung zuzuführen und gegebenenfalls zu granulieren

Die erfindungsgemäßen Kautschukpulver, die ebenso Gegenstand der Erfindung sind, werden im allgemeinen, wenn silikatische oder oxidische Füllstoffe, insbesondere gefällte Kieselsäuren, eingesetzt werden, unter Verwendung einer oder mehrerer Organosiliciumverbindungen der allgemeinen Formeln

[ R¹ ₙ(RO)₃₋ₙ Si-(Alk)ₘ -(Ar)ₚ ] _{q} [B] (I),

R¹ ₙ (RO)₃₋ₙ Si-(Alkyl) (II),

oder

R¹ ₙ (RO)₃₋ₙ Si-(Alkenyl) (III)

hergestellt,
in denen bedeuten
- B:: -SCN, -SH -Cl, NH₂ (wenn q = 1) oder -Sx- (wenn q = 2)
- R und R¹:: eine Alkylgruppe mit 1 bis 4 Kohlenstoffatomen, verzweigt oder nicht verzweigt, den Phenylrest, wobei alle Reste R und R¹ jeweils die gleiche oder eine verschiedene Bedeutung haben können, bevorzugt eine Alkylgruppe,
- n:: 0; 1 oder 2,
- Alk:: eine zweiwertigen geraden oder verzweigten Kohlenwasserstoffrest mit 1 bis 6 Kohlenstoffatomen,
- m:: 0 oder 1
- Ar:: einen Arylenrest mit 6 bis 12 C-Atomen
- p:: 0 oder 1 mit der Maßgabe, daß p, m oder n nicht gleichzeitig 0 bedeuten,
- x:: eine Zahl von 2 bis 8,
- Alkyl:: einen einwertigen geraden oder verzweigten gesättigten Kohlenwasserstoffrest mit 1 bis 20 Kohlenstoffatomen, bevorzugt 2 bis 8 Kohlenstoffatomen,
- Alkenyl:: einen einwertigen geraden oder verzweigten ungesättigten Kohlenwasserstoffrest mit 2 bis 20 Kohlenstoffatomen, bevorzugt 2 bis 8 Kohlenstoffatomen.

Diese Verbindungen werden, wenn sie wasserlöslich sind, im allgemeinen in Form von Lösungen oder in Form von Emulsionen eingesetzt, wobei die Lösungen oder Emulsionen auch in Gegenwart der Suspension der silikatischen Füllstoffe oder deren Gemischen mit Ruß gebildet werden können.

Man stellt die Emulsionen oder Lösungen bevorzugt bei Raumtemperatur her. Es sind aber auch Temperaturen von 10 bis 60 °C geeignet. Die Konzentration der Organosiliciumverbindung(en) in den eingesetzten Lösungen oder der Suspension beläuft sich auf 0,5 bis 20 Gew.-%, bevorzugt 5 bis 12 Gew.-%, bezogen auf die Gesamtmenge des eingesetzten silikatischen Füllstoffs.

Der pH-Wert der Emulsion oder Lösung liegt ebenso wie der pH-Wert der Füllstoffsuspension nach dem Zumischen der Emulsion im schwach sauren oder schwach alkalischen Bereich, bevorzugt aber bei einem pH-Wert von etwa 7.

Unter dem verwendeten Begriff wasserunlöslich ist zu verstehen:

Nach dem Vermischen der Organosilanverbindung (ohne oberflächenaktive Substanz) mit der Suspension des Füllstoffs bildet sich um die Füllstoffteilchen herum im gewünschten pH- und Konzentrationsbereich keine klare Lösung. Es bleiben vielmehr die getrennten Phasen, die aus Wasser, Feststoff und Organosiliciumverbindung (en) bestehen. Die oligosulfidischen Organosilane gemäß der oben angegebenen allgemeinen Formel I sind an sich bekannt und können nach bekannten Verfahren hergestellt werden. Beispiele für vorzugsweise eingesetzte Organosilane sind die z.B. nach der US-PS 3 842 111 herstellbaren Bis(trialkoxysilyl-alkyl)oligosulfide wie Bis (trimethoxy-, triethoxy-, trimethoxy- ethoxy-, tripropoxy-, tributoxy-, tri-i-propoxy und tri-i-butoxy-silyl-methyl)-oligosulfide und zwar insbesondere die Di-, Tri-, Tetra-, Penta-, Hexasulfide usw., weiterhin Bis-(2-tri-methoxy-, triethoxy-, trimethoxyethoxy-, tripopoxy- und -tri-n- und -i-butoxyethyl)-oligosulfide und zwar insbesondere die Di-, Tri-, Tetra-, Penta-, Hexasulfide usw., ferner die Bis-(3-trimethoxy-, triethoxy-, trimethoxyethoxy-, tripropoxy-,-tri-n-butoxy- und tri-i-butoxysilyl-propyl)-oligosulfide und zwar wiederum die Di-, Tri-, Tetrasulfide usw. bis zu Octasulfiden, des weiteren die entsprechenden Bis-(3-trialkoxysilylisobutyl)-oligosulfide, die entsprechenden Bis-(4-trialkoxysilylbutyl)-oligosulfide. Von diesen ausgewählten, relativ einfach aufgebauten Organosilanen der allgemeinen Formel I werden wiederum bevorzugt die Bis-(3-trimethoxy-, triethoxy- und tripropoxysilylpropyl)oligosulfide, und zwar die Di-, Tri-, Tetra- und Pentasulfide, insbesondere die Triethoxyverbindungen mit 2, 3 oder 4 Schwefelatomen und deren Mischungen. Alk bedeutet in der allgemeinen Formel I einen zweiwertigen, geraden oder verzweigten Kohlenwasserstoffrest mit 1 bis 6 Kohlenstoffatomen, vorzugsweise einen gesättigten Alkylenrest mit gerader Kohlenstoffkette mit 1 bis 4 Kohlenstoffatomen.

Speziell geeignet sind auch die Silane mit der folgenden Strukturformel 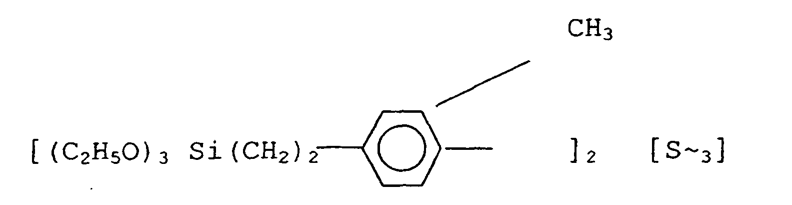 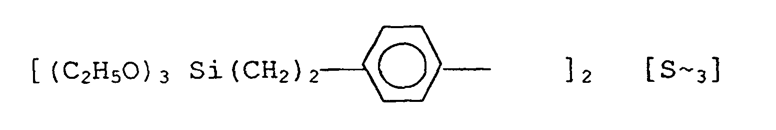 und deren Methoxyanaloge, herstellbar nach der DE-AS 25 58191. Diese Verbindungen sind nicht wasserlöslich.

Als oberflächenaktive Substanzen finden im allgemeinen und in diesem Fall bevorzugt nichtionogene, kationische und anionische Tenside Verwendung. Ihre Konzentration in der Emulsion beträgt 1 bis 15 Gew.-%, bevorzugt 2 bis 10 Gew.-%, bezogen auf die Menge an Organosilanverbindungen.

Beispiele für derartige Tenside sind
Alkylphenolpolyglycolether,
Alkylpolyglycolether, Polyglycole,
Alkyltrimethylammoniumsalze, Dialkyldimethylammoniumsalze,
Alkylbenzyltrimethylammoniumsalze, Alkylbenzolsulfonate,
Alkylhydrogensulfate, Alkylsulfate.

Die zu modifizierenden natürlichen oder gefällten oxidischen oder silikatischen Füllstoffe, auch als Gemisch von zwei oder mehreren dieser Füllstoffe, sind an sich in der Kautschuktechnologie bekannte Füllstoffe. Wesentliche Voraussetzung für ihre Eignung ist das Vorhandensein von OH-Gruppen an der Oberfläche der Füllstoffteilchen, die mit den Alkoxygruppen der Organosiliciumverbindungen reagieren können. Es handelt sich um oxidische und silikatische Füllstoffe, die mit Kautschuken verträglich sind, und die für diese Verwendung notwendige und bekannte Feinteiligkeit aufweisen.

Als natürliche Silikate sind besonders Kaoline oder Clays geeignet. Aber auch Kieselgur oder Diatomeenerde können eingesetzt werden.

Als oxidische Füllstoffe sind beispielhaft zu nennen Aluminiumoxid, Aluminiumhydroxid oder -trihydrat und Titandioxid.

"Modifizierte Füllstoffe" bedeutet in diesem Zusammenhang, daß die Organosilanverbindungen entweder durch chemische Umsetzung (OH-Gruppen) oder adsorptiv an die Oberfläche gebunden sind.

Die adsorptiv gebundenen Gruppen werden spätestens durch den Trocknungsschritt in chemisch gebundene umgewandelt.

Die Emulsion oder Lösung wird in derartigen Mengen mit der Füllstoffsuspension vermischt, daß die Konzentration der Organosiliciumverbindung 0,5 bis 20 Gew.-%, bevorzugt 5 bis 12 Gew.-%, bezogen auf die Füllstoffmenge beträgt. Die modifizierten Füllstoffe enthalten 0,5 bis 20 Gew.-%, bevorzugt 0,5 bis 12 Gew.-%, der Organosiliciumverbindungen, bezogen auf den trockenen Füllstoff.

Sie sind besonders geeignet zur Verwendung in vulkanisier- und formbaren Kautschukmischungen.

Man setzt für das erfindungsgemäße Verfahren vorteilhaft einen salzfrei gewaschenen Filterkuchen aus der Kieselsäurefällung ein.

Geeignet sind auch Suspensionen, wie man sie bei der Aufarbeitung von natürlichen Füllstoffen wie Clays erhält.

Man spart so gegenüber dem Stand der Technik einen energieaufwendigen Trocknungsschritt.

Die eingesetzten Kieselsäuren sind aus dem Kautschuksektor bekannt.

Sie besitzen im allgemeinen eine nach der bekannten BET-Methode bestimmte N₂-Oberfläche von 35 bis 700 m²/g, eine CTAB-Oberfläche von 30 bis 500 m²/g, eine DBP-Zahl von 150 bis 400 ml/100g.

Das erfindungsgemäße Produkt enthält diese Kieselsäuren in einer Menge von > 250 bis 5000 Teilen, insbesondere 400 bis 1000 Teilen, bezogen auf 100 Teile Kautschuk.

Handelt es sich um weiße Naturfüllstoffe, wie Clays oder Kieselkreiden mit einer N₂-Oberfläche von 2 bis 35 m²/g setzt man diese bevorzugt in einer Menge von 400 bis 1250 Teile, bezogen auf 100 Teile Kautschuk, ein.

Herstellbar sind auch füllstoffhaltige Kautschukpulver, die silikatischen Füllstoffe, insbesondere Kieselsäuren, und Ruße im Gemisch oder nur Ruße enthalten. Die Gesamtmenge an Füllstoff kann hierbei zwischen > 250 bis 5000 phr, insbesondere bis 2000 phr, liegen. Der Anteil an Kieselsäure beläuft sich, wenn sie vorhanden ist, im allgemeinen auf > 250 phr bis 1250 phr.

Für Füllgrade > 1000 phr wird insbesondere Ruß als Füllstoff gewählt, im allgemeinen wird Ruß mit > 250 bis 1000 phr eingesetzt.

Besonders geeignet sind Ruße, wie sie allgemein in der Kautschukverarbeitung eingesetzt werden.

Dazu gehören Furnaceruße, Gas- und Flammruße mit einer Jodadsorptionszahl 5 bis 1000 m²/g, einer CTAB-Zahl von 15 bis 600 m²/g, einer DBP-Adsorption von 30 bis 400 ml/100 g und einer 24 M4 DBP-Zahl von 50 bis 370 ml/100 g.

Als Kautschuktypen einsetzbar und als wässrige Emulsionen darstellbar haben sich folgende Spezies gezeigt, einzeln oder im Gemisch miteinander:

Naturkautschuk, Emulsions-SBR mit einem Styrolanteil von 10 bis 50 %, Butyl-Acrylnitril-Kautschuk.

Butylkautschuke, Terpolymere aus Ethylen, Propylen (EPM) und nicht konjugierte Diene (EPDM), Butadienkautschuke, SBR, hergestellt nach dem Lösungspolymerisationsverfahren, mit Styrolgehalten von 10 bis 25 %, sowie Gehalten an 1,2-Vinylbestandteilen von 20 bis 55 % und Isoprenkautschuke, insbesondere 3,4-Polyisopren.

Besonders geeignet sind Emulsions- und Lösungs-SBR.

Bei nach Lösungsmittelverfahren hergestellten Polymerisaten sind bei der Verarbeitung besondere Vorsichtsmaßnahmen wegen des Lösungsmittelgehalts zu treffen.

Neben den genannten Kautschuken kommen folgende Elastomere, einzeln oder im Gemisch, in Frage:

Carboxylkautschuke, Epoxidkautschuke, Trans-Polypentenamer, halogenierte Butylkautschuke, Kautschuke aus 2-Chlor-Butadien, Ethylen-Vinylacetat-Copolymere, Epichlorhydrine, gegebenenfalls auch chemisch modifizierter Naturkautschuk, wie z.B. epoxidierte Typen. Die erfindungsgemäßen Kautschukpulver besitzen im allgemeinen eine Teilchengröße von 25 µm bis 3000 µm, insbesondere von 500 µm bis 1000 µm, und können neben den bereits genannten Füllstoffen gegebenenfalls in der Kautschuk verarbeitenden Industrie bekannte Verarbeitungs- oder Vulkanisationshilfsmittel wie Zinkoxid, Zinkstearat, Stearinsäure, Polyalkohole, Polyamine, Weichmacher, Alterungsschutzmittel gegen Wärme, Licht oder Sauerstoff und Ozon, Verstärkerharze, Flammschutzmittel wie z.B. Al(OH)₃ und Mg(OH)₂, Pigmente, verschiedene Vernetzungschemikalien und gegebenenfalls Schwefel in den gummitechnisch üblichen Konzentrationen enthalten. Diese werden bevorzugt der Füllstoffe enthaltenden Suspension vor dem Ausfällen des Kautschukpulvers zugesetzt, natürlich unter Berücksichtigung ihrer pH-Stabilität.

Es gelingt erfindungsgemäß, feinteilige mit Organosiliciumverbindungen modifizierte silikatische Füllstoffe und/oder Ruß enthaltende Kautschukpulver herzustellen, die in dieser Form in Kombination mit allen gängigen Kautschukarten als verstärkende Füllmittel eingesetzt werden können. Insbesondere die silanisierte Kieselsäure enthaltenden Pulverkautschuke, zeichnen sich durch hohe Lagerstabilität aus, sind ohne nennenswerte Abspaltung von Alkohol leicht verarbeitbar und führen zu ausgezeichneten gummitechnischen Wertebildern der unter ihrer Verwendung hergestellten Vulkanisate.

Mit der vorliegenden Erfindung wird eine neue Entwicklung angestoßen, die die Bereitstellung eines polymergebundenen, gegebenenfalls modifizierten Füllstoffs in der Kautschuk verarbeitenden Industrie beinhaltet.

Im Gegensatz zu klassischen Mischprozessen gelingen Füllgrade mit hochaktiven Kieselsäurefüllstoffen > 250 phr, insbesondere zwischen 400 bis 1250 phr nur mit Hilfe der Pulverkautschuktechnologie. Dies bedeutet, daß nach der Fällung jedes Füllstoffteilchen trotz des hohen Füllgrades noch von einer dünnen Kautschukschicht umgeben ist. Man kann in diesem Falle von einem Coating des Füllstoffes durch das Polymer sprechen. Man erhält auf diese Art und Weise einen nicht staubenden Füllstoff, der gegebenenfalls mit einem wasserabweisenden Überzug versehen ist, den man wie einen normalen Füllstoff im klassischen Mischprozeß und in jeden beliebigen Kautschuk einarbeiten kann.

In den nachfolgenden Beispielen werden die Durchführbarkeit und die Vorteile der vorliegenden Erfindung erläutert, ohne daß sie auf die dort beschriebenen Maßnahmen eingeschränkt wird.

### Eingesetzte Rohstoffe bei der Herstellung

| | |
|---|---|
| E - SBR | Emulsions - Styrolbutadienlatex mit 23,5 % Styrolgehalt (BSL) |
| Si 69 | Bis(triethoxysilylpropyl)tetrasulfan (Degussa-Hüls AG) |
| Si 75 | Bis(triethoxysilylpropyl)disulfan (Degussa-Hüls AG) |
| Ultrasil 7000 | gefällte Kieselsäure mit einer N₂-Oberfläche (BET) von 175 m²/g und verbesserten Dispergiereigenschaften (Degussa-Hüls AG) getrocknet oder als Filterkuchen |
| Marlipal 1618/25 | Emulgator: Fettalkoholpolyethylenglykolether |

### Beispiel I

### Herstellung eines Pulverkautschuks unter Verwendung von E - SBR,

### Ultrasil 7000 und Si 69 (EPB I)

Unter Rühren wird eine stabile Suspension aus 22,5 kg 7000 Filterkuchen, 1,8 kg Si 69 und 0,225 kg Marlipal 1618/25 in 272 l Wasser hergestellt.

Anschließend wird diese Suspension mit 13,62 kg einer 21 %igen E- SBR Latexemulsion E - SBR - 1500 unter heftigem Rühren vermischt und anschließend durch Zugabe einer 10 %igen Al₂(SO₄)₃ Lösung auf einen pH-Wert von 5,0 abgesenkt.

Nach dem Fällprozeß erfolgt eine mechanische Abtrennung des größten Teils des Wassers, gefolgt von einem Trocknungschritt auf eine Restfeuchte von < 1 %. Das pulverförmige, freifließende Produkt enthält 100 Tle E-SBR, 750 Tle Kieselsäure und 8 Teile Si 69 bez. auf 100 Tle Kieselsäure. Die Reaktion wurde so geführt, daß das Silan vollständig gebunden auf der Kieselsäure vorliegt.

### Beispiel II

### Herstellung eines Pulverkautschuks unter Verwendung von E - SBR, Ultrasil 7000 Filterkuchen und Si 75

Unter Rühren wird eine stabile Suspension aus 103 kg 7000 Filterkuchen, 1,8 kg Si 75 und 0,225 kg Marlipal 1618/25 in 272 l Wasser hergestellt.

Anschließend wird die Suspension mit 13,71 kg einer 21 %igen E-SBR Latexemulsion unter heftigem Rühren vermischt und anschließend durch Zugabe einer 10 %igen Al₂(SO₄)₃ Lösung auf einen End-pH-Wert von 5,0 abgesenkt. Nach dem Fällprozeß erfolgt eine mechanische Abtrennung des Wassers gefolgt von einem Trocknungsschritt auf eine Restfeuchte von < 1 %.

Das pulverförmige Produkt enthält 100 Tle E-SBR, 750 Tle Kieselsäure, 8 Tle Si 75 bez. auf 100 Tle Kieselsäure. Die Reaktion wird so geführt, daß das Silan vollständig auf der Kieselsäure gebunden vorliegt.

In der gummitechnischen Anwendung wurden folgende Produkte eingesetzt:

| **Chemikalien** | |
|---|---|
| E-SBR 1500 | Styrol-Butadien Kautschuk mit 23,5 % Styrolgehalt |
| Naftolen ZD | arom. Mineralölweichmacher |
| EPB I | Pulverkautschuk, bestehend aus 100 Teilen E-SBR 1500, 750 Teilen Ultrasil 7000 umgesetzt mit 8 Teilen Si 69 bezogen auf 100 Teile KS |
| 6 PPD | N-(1,3-Dimethylbutyl)N-phenyl-p-phenylendiamin |
| CBS | Benzothiazyl-2-cyclohhexylsulfenamid |
| DPG | Diphenylguanidin |
| TBZTD | Tetrabenzylthiuramdisulfid |
| Buna VSL 5025-1 | ölgestreckter Lösungs-SBR mit 50 % 1,2 - Vinylanteil und 25 Styrol (Bayer AG) |
| Buna CB 24 | Butadienkautschuk (cis > 96 %) (Bayer AG) |

Folgende gummitechnische Prüfmethoden wurden angewandt:

| | |
|---|---|
| Mooney-Viskosität | DIN 53 523/3 |
| Zugversuch | DIN 53 504 |
| Modul 300% | DIN 53 504 |
| Modul 300/100 % | |
| Shore Härte | DIN 53 505 |
| Dispersion (Philips) | ISO/DIS 11 345 |
| Bruchdehnung | DIN 53 504 |
| Vulkameterkurve | DIN 53 529 |
| Ball Rebound | ASTM D 5308 |
| Viskoelastische Eigenschaften | DIN 53 513 |

### Beispiel A

Vergleich des gummitechnischen Wertebildes des erfindungsgemäßen Produktes (Herstellbeispiel 1) gegen eine Standardmischung

| Rezeptur | | |
|---|---|---|
| | 1 (Standard) | 2 |
| Buna VSL 5025-1 | 81,3 | 81,3 |
| Buna CB 24 | 30 | 30 |
| E-SBR | 10 | - |
| EPB I | - | 97,6 (10 Tle. E-SBR) |
| Ultrasil 7000 GL | 80 | - |
| Si 69 | 6,4 | - |
| ZnO RS | 3 | 3 |
| Stearinsäure | 2 | 2 |
| Naftolen ZD | 14 | 14 |
| 6 PPD | 1,5 | 1,5 |
| Wachs | 1 | 1 |
| DPG | 2 | 2 |
| CBS | 1,5 | 1,5 |
| TBZTD | 0,2 | 0,2 |
| Schwefel | 1,5 | 1,5 |

### Mischverfahren

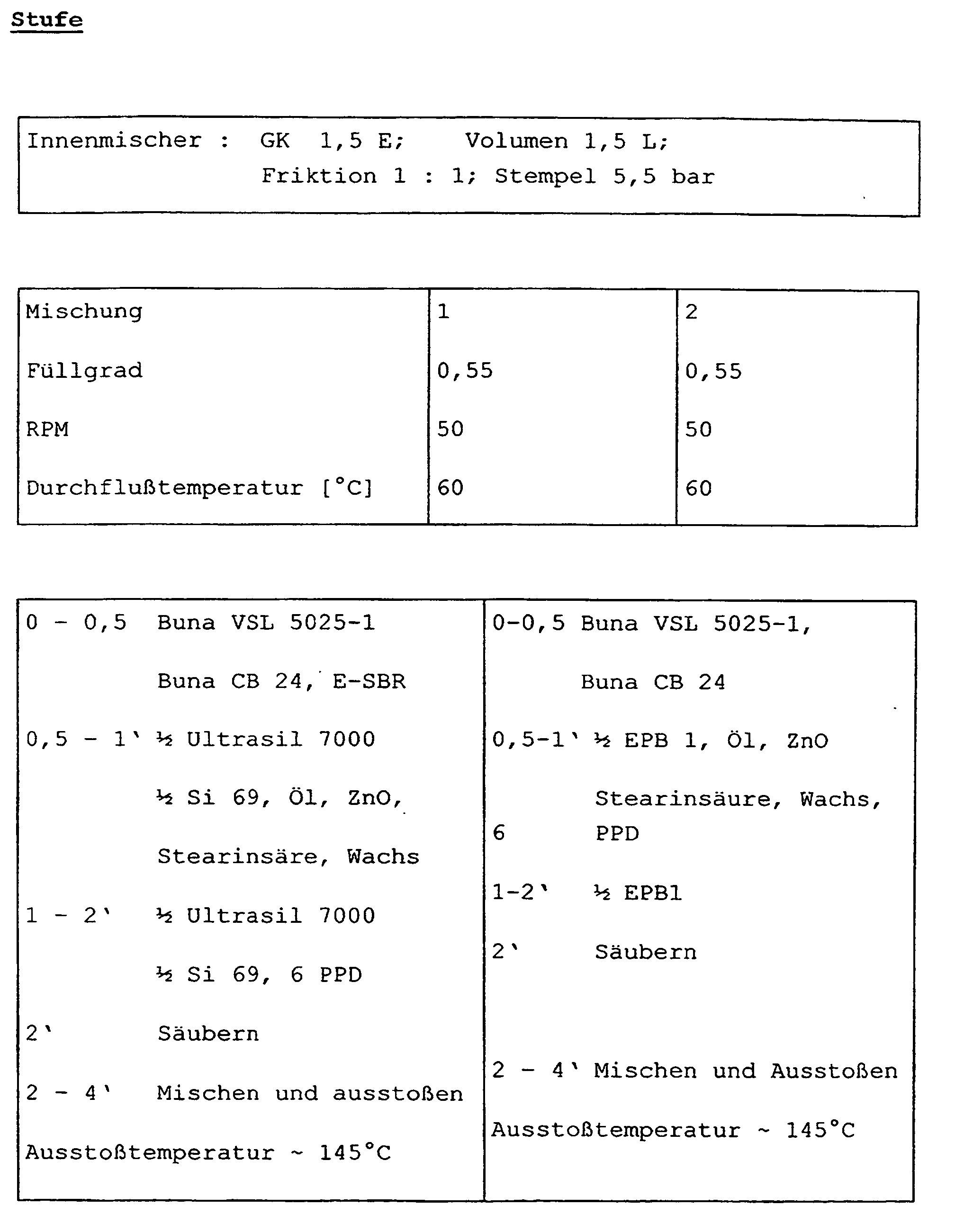

| **Stufe** | |
|---|---|
| Innenmischer: | GK 1,5 E; Volumen 1,5 1; Friktion 1: 1 Stempel 5,5 bar; RPM 40; Füllgrad 0,53; Durchflußtemperatur 60 % |
| Beide Mischungen | |
| 0 - 3' Batch Stufe 1 mischen und ausstoßen | |
| Ausstoßtemperatur: ~135°C | |

| **Stufe** | |
|---|---|
| Innenmischer : | GK 1,5 E; Volumen 1,5 L; Friktion 1 : 1; Stempel 5,5 bar; RPM 30; Füllgrad 0,52; Durchflußtemperatur 60°C |
| Beide Mischungen | |
| 0 - 1,5 Batch Stufe 2, Beschleuniger, Schwefel | |
| 1,5' Ausstoßen und Fell ausziehen | |

| **Gummitechnische Daten** Vulkanisation: 165 °C, 15' | | |
|---|---|---|
| | 1 Standard | 2 |
| Dmax - Dmin [Nm] | 15,61 | 15,93 |
| Dmin [Nm] | 2,23 | 2,01 |
| t10 % [min] | 1,6 | 1,5 |
| t90 [min] | 6,5 | 6,6 |
| Zugfestigkeit [MPa] | 13,6 | 16,2 |
| Modul 300 % [MPa] | 8,4 | 8,5 |
| Modul 300/100 | 4,9 | 5,0 |
| Bruchdehnung [%] | 420 | 490 |
| Shore A Härte | 62 | 62 |
| Ball Rebound RT [%] | 35,8 | 38,7 |
| Dispersion (Philips) | 8 | 8 |
| E' 0°C[MPA] | 17,0 | 14,6 |
| E'' 0°C [MPA] | 7,5 | 6,3 |
| tan δ 0°C | 0,445 | 0,430 |
| E' 60°C[MPA] | 8,0 | 7,2 |
| E'' 60°C [MPA] | 1,0 | 1,0 |
| tan δ 60°C | 0,131 | 0,136 |

Mit den unter Verwendung der erfindungsgemäßen Produkte hergestellten Vulkanisaten findet man in der gummitechnischen Prüfung gegenüber dem Standard höhere Festigkeits- und Bruchdehnungswerte und exzellente dyn. Daten. Im Gegensatz zum Standardversuch tritt bei Verwendung des Pulverkautschuks nahezu keine Ethanolentwicklung auf.

## Patentansprüche

1. Verfahren zur Herstellung von Kautschukpulver, enthaltend einen oder mehrere oxidische(n) oder silikatische(n) Füllstoff(e), insbesondere eine gefällte Kieselsäure, in einer Menge > 250 phr bis 5000 phr, wenn es sich um einen synthetischen Füllstoff dieser Art handelt, oder in einer Menge von > 350 phr bis 5000 phr, wenn es sich um einen natürlichen Füllstoff handelt, deren Oberfläche mit einer oder mehreren Organosiliciumverbindungen der allgemeinen Formeln
[R¹ ₙ(RO)₃₋ₙ Si-(Alk)ₘ - (Ar)ₚ]_{q} [B] (I),
R¹ ₙ(RO)₃₋ₙ Si-(Alkyl) (II),
oder
R¹ ₙ(RO)₃₋ₙ Si-(Alkenyl) (III),
in denen bedeuten
B: -SCN, -SH -Cl, NH₂ (wenn q = 1) oder Sₓ (wenn q = 2)
R und R¹: eine Alkylgruppe mit 1 bis 4 Kohlenstoffatomen, verzweigt oder nicht verzweigt, den Phenylrest, wobei alle Rest R und R¹ jeweils die gleiche oder eine verschiedene Bedeutung haben können, bevorzugt eine Alkylgruppe,
n: 0; 1 oder 2,
Alk: einen zweiwertigen geraden oder verzweigten Kohlenwasserstoffrest mit 1 bis 6 Kohlenstoffatomen,
m: 0 oder 1
Ar: einen Arylenrest mit 6 bis 12 C-Atomen
p: 0 oder 1 mit der Maßgabe, dass p, m und n nicht gleichzeitig 0 bedeuten,
x: eine Zahl von 2 bis 8,
Alkyl: einen einwertigen geraden oder verzweigten gesättigten Kohlenwasserstoffrest mit 1 bis 20 Kohlenstoffatomen, bevorzugt 2 bis 8 Kohlenstoffatomen,
Alkenyl: einen einwertigen geraden oder verzweigten ungesättigten Kohlenwasserstoffrest mit 2 bis 20 Kohlenstoffatomen, bevorzugt 2 bis 8 Kohlenstoffatomen,
während der Herstellung modifiziert wird, allein oder in Kombination mit Ruß in einer Menge > 250 phr bis 5000 phr, wobei die Gesamtmenge der Füllstoffe 5000 phr nicht überschreitet.

2. Verfahren zur Herstellung feinteiliger füllstoffhaltiger Kautschuke (Kautschukpulver) nach Anspruch 1 durch Ausfällen aus wasserhaltigen Mischungen, die Füllstoff in Form von Suspensionen, eine wässrige Emulsionen eines Kautschuks (Polymers) oder eine Kautschuklösung enthalten, durch Zusatz von wasserlöslichen Salzen eines Metalls, ausgewählt aus den Gruppen II a, II b, III a und VIII des periodischen Systems,
**dadurch gekennzeichnet,**
**daß** man
a) zunächst aus einer silikatischen Verbindung allein oder in Kombination mit Rußen und Wasser eine Füllstoffsuspension mit einer Suspensionsdichte zwischen 0,5 - 10%, insbesondere zwischen 5 - 7 % bezogen auf den Feststoff unter Rühren herstellt, gegebenenfalls die Feststoffteilchen zuvor mittels eines geeigneten Mahlwerkes heruntermahlt (deagglomeriert), gegebenenfalls zusätzlich Wasserstoffbrückenbildende Verbindungen wie Polyalkohole oder polyvalente Amine in Mengen von 0,5 - 10 Teilen, bezogen auf 100 Teile des Füllstoffs, zur Suspension hinzufügt, und gegebenenfalls die Suspension auf Temperaturen im Bereich zwischen 25 - 95 °C erwärmt;
b) anschließend eine oder mehrere Organosiliciumverbindung(en) gemäß den Formeln (I) bis (III), die mindestens eine Alkoxygruppe enthalten, in Wasser gelöst oder direkt oder gegebenenfalls in Anwesenheit einer oberflächenaktiven Substanz in Wasser emulgiert, mit der genannten wässrigen Suspension dieses Füllstoffs oder dessen Mischung mit einem Ruß bei einer Temperatur von 10 bis 60 °C, bevorzugt bei Raumtemperatur, unter Rühren vermischt,
c) diese so hergestellte Suspension mit dem Polymerlatex, der Polymeremulsion oder der Polymerlösung vermischt, den pH-Wert dieser Mischung mit einer Säure oder der wäßrigen Lösung eines der oben genannten Salze, insbesondere einer Lewissäure auf einen pH-Wert von 7 bis 4, bevorzugt zwischen 6,5 bis 4,5 absenkt und den in der Mischung befindlichen Kautschuk zusammen mit den gegebenenfalls durch die genannten Organosiliciumverbindungen modifizierten Füllstoffen ausfällt.
d) das ausgefallene füllstoffhaltige Kautschukpulver mit an sich bekannten Maßnahmen abtrennt, gegebenenfalls säurefrei wäscht,
e) den so erhaltenen Füllstoff trocknet und gegebenenfalls granuliert.

3. Verfahren gemäß Anspruch 2,
**dadurch gekennzeichnet,**
**daß** man im Anschluß an Schritt c) der Reaktionsmischung wässrige Kunststoffemulsionen enthaltend Polystyrol, Polystyrolbutadiencopolymere unterschiedlicher Zusammensetzung, Polyethylene, Polypropylene oder Polyvinylacetat unterschiedlicher chemischer Konstitution in Mengen von 0,5 bis 10 phr, insbesondere 1 bis 4 phr, zusetzt.

4. Verfahren gemäß Anspruch 2,
**dadurch gekennzeichnet,**
**daß** man die Füllstoff-Konzentration in der Reaktionsmischung einstellt auf:
a) > 250 phr, insbesondere 400 phr bis 5000 phr, bei Einsatz von synthetischen Kieselsäuren bzw. des bei deren Herstellung anfallenden Filterkuchens,
b) > 350 phr, insbesondere 400 phr bis 1250 phr, bie Verwendung eines natürlichen silikatischen Füllstoffs auch in Form der bei der Aufarbeitung anfallendenden Aufschlämmung, oder
c) Ruße einzeln oder im Gemisch mit den vorgenannten Füllstoffen auf > 250 bis 5000 phr.

5. Verfahren gemäß den Ansprüchen 2 bis 4,
**dadurch gekennzeichnet,**
**daß** man als oberflächenaktive Substanzen nichtionogene, kationische oder anionische Tenside einsetzt.

6. Verfahren gemäß einem oder mehreren der vorhergehenden Ansprüche,
**dadurch gekennzeichnet,**
**daß** man der Suspension vor dem Fällungsschritt bis zu 5 Gew.-Teilen einer Alkalisilikatlösung, bevorzugt Wasserglas mit einem Na₂O : SiO₂ Verhältnis von 2 : 1 bis 1 : 4, bezogen auf 100 Teile Kautschuk zusetzt.

7. Verfahren gemäß einem oder mehreren der vorhergehenden Ansprüche,
**dadurch gekennzeichnet,**
**daß** man gefällte Kieselsäuren in Form des bei deren Herstellung gewonnen Filterkuchens einsetzt.

8. Verfahren gemäß einem oder mehreren der vorhergehenden Ansprüche,
**dadurch gekennzeichnet,**
**daß** man zur Herstellung der Suspensionen gemäß Anspruch 2, Punkt a) mit einer oder mehreren Organosiliciumverbindungen gemäß den Formeln (I) bis (III) vormodifizierte silikatische Füllstoffe einsetzt.

9. Verfahren gemäß Anspruch 2,
**dadurch gekennzeichnet,**
**daß** man der Suspension des Füllstoff, gegebenenfalls noch deren Vermischen mit dem Polymer (Kautschuk) aber vor dem Fällvorgang (Punkt c) eines oder mehrere der Verarbeitungs- oder Vulkanisationshilfsmittel
Zinkoxid,
Zinkstearat,
Stearinsäure,
Polyalkohole,
Polyamine,
Weichmacher,
Alterungsschutzmittel gegen Wärme, Licht oder Verstärkerharze,
Flammschutzmittel (Al(OH)₃, Mg(OH)₂),
gegebenenfalls Schwefel in den gummitechnisch üblichen Konzentrationen zusetzt.

10. Kautschuk hergestellt nach einem oder mehreren der vorhergehenden Ansprüche,
der mit einem Kornspektrum von 25 µm bis 3000 µm oder in granulierter Form von 2 bis 10 mm vorliegt.

11. Verfahren zur Herstellung von vulkanisierbaren Kautschukmischungen,
**dadurch gekennzeichnet,**
**daß** man Kautschuk hergestellt nach einem oder mehreren der vorliegenden Ansprüche als Füllstoff in den für Füllstoffe üblichen Mengen in den entsprechenden Kautschuk einarbeitet, gegebenenfalls unter Zusatz weiterer notwendiger bekannter Verarbeitungs- und Vulkanisationshilfsmittel.

## Claims

1. A process for preparing rubber powder containing one or more oxidic or silicatic fillers, in particular a precipitated silica, in an amount of >250 phr to 5000 phr in the case of a synthetic filler of this kind, or in an amount of > 350 phr to 5000 phr in the case of a natural filler, the surface thereof being modified, during preparation, with one or more organosilicon compounds of the general formulae
[R¹ ₙ(RO)₃₋ₙSi-(Alk)ₘ-(Ar)ₚ]_{q}[B] (I),
[R¹ ₙ(RO)₃₋ₙSi- (Alkyl) (II),
or
[R¹ ₙ(RO)₃₋ₙSi-(Alkenyl) (III)
in which
B is -SCN, -SH, -Cl or NH₂ (if q = 1) or Sₓ (if q = 2)
R and R¹ are each an alkyl group having from 1 to 4 carbon atoms, branched or not branched, or the phenyl radical, it being possible for all radicals R and R¹ to have in each case the same definition or a different definition, preferably an alkyl group,
n is 0, 1 or 2,
Alk is a divalent straight or branched hydrocarbon radical having from 1 to 6 carbon atoms,
m is 0 or 1,
Ar is an arylene radical having from 6 to 12 carbon atoms,
p is 0 or 1, with the proviso that p, m and n are not simultaneously 0,
x is a number from 2 to 8,
Alkyl is a monovalent straight or branched saturated hydrocarbon radical having from 1 to 20 carbon atoms, preferably from 2 to 8 carbon atoms,
Alkenyl is a monovalent straight or branched unsaturated hydrocarbon radical having from 2 to 20 carbon atoms, preferably from 2 to 8 carbon atoms,
alone or in combination with carbon black in an amount of >250 phr to 5000 phr, the total amount of the fillers not exceeding 5000 phr.

2. A process for preparing a finely divided, filler-containing rubber (rubber powder) according to claim 1 by precipitation from a water-containing mixture containing filler in suspension form, an aqueous emulsion of a rubber (polymer) or a rubber solution, by adding water-soluble salts of a metal selected from groups IIa, IIb, IIIa and VIII of the Periodic Table,
**characterized in that**
a) first a filler suspension having a suspension density of from 0.5% to 10%, in particular from 5% to 7%, based on the solids, is prepared from a silicatic compound, alone or in combination with carbon black and water, with stirring, the solids particles being ground down (deagglomerated), if desired, beforehand, by means of a suitable mill, additionally, if desired, a compound which forms hydrogen bonds, such as a polyalcohol or polyvalent amine, is added in an amount of from 0.5 to 10 parts, based on 100 parts of the filler, to the suspension, and, if desired, the suspension is heated to a temperature within the range from 25 to 95°C;
b) subsequently one or more organosilicon compounds of the formulae (I) to (III) containing at least one alkoxy group are mixed, in solution in water or emulsified directly or, if desired, in the presence of a surface-active substance in water, with the stated aqueous suspension of this filler or a mixture thereof with a carbon black, at a temperature from 10 to 60°C, preferably at room temperature, with stirring,
c) this suspension thus prepared is mixed with the polymer latex, the polymer emulsion or the polymer solution, the pH of this mixture is lowered to a pH of from 7 to 4, preferably from 6.5 to 4.5, using an acid or the aqueous solution of one of the abovementioned salts, in particular a Lewis acid, and the rubber present in the mixture is precipitated together with the filler modified, if desired, by means of the stated organosilicon compound,
d) the precipitated, filler-containing rubber powder is separated off by measures which are known per se, and, if desired, is washed free of acid, and
e) the filler thus obtained is dried and, if desired, granulated.

3. A process according to claim 2, **characterized in that** following step c) an aqueous polymer emulsion containing polystyrene, polystyrene-butadiene copolymers of various compositions, polyethylene, polypropylene or polyvinyl acetate of various chemical constitution is added in an amount of from 0.5 to 10 phr, in particular from 1 to 4 phr, to the reaction mixture.

4. A process according to claim 2, **characterized in that** the filler concentration in the reaction mixture is adjusted to:
a) >250 phr, in particular from 400 phr to 5000 phr, when using synthetic silica and/or the filter cake obtained during its preparation,
b) > 350 phr, in particular from 400 phr to 1250 phr, when using a natural silicatic filler, as it is or in the form of the slurry obtained during work-up, or
c) for carbon black, individually or in a mixture with the aforementioned fillers, > 250 to 5000 phr.

5. A process according to any of claims 2 to 4, **characterized in that** a nonionic, cationic or anionic surfactant is used as a surface-active substance.

6. A process according to one or more of the preceding claims, **characterized in that** prior to the precipitation step up to 5 parts by weight of an alkali metal silicate solution, preferably waterglass with an Na₂O:SiO₂ ratio of from 2:1 to 1:4, based on 100 parts of rubber, are added to the suspension.

7. A process according to one or more of the preceding claims, **characterized in that** precipitated silica is used in the form of the filter cake obtained during its preparation.

8. A process according to one or more of the preceding claims, **characterized in that** the suspension according to claim 2, section a) is prepared using a silicatic filler premodified with one or more organosilicon compounds according to the formulae (I) to (III).

9. A process according to claim 2, **characterized in that** one or more of the following processing aids or vulcanizing aids are added to the suspension of the filler, if desired after it has been mixed with the polymer (rubber) but prior to the precipitation operation (section c):
zinc oxide,
zinc stearate,
stearic acid,
polyalcohols,
polyamines,
plasticizers,
anti-ageing heat or light stabilizers or reinforcing resins,
flame retardants (Al(OH)₃, Mg(OH)₂),
if desired, sulphur, at a concentration customary in the rubber industry.

10. A rubber prepared according to one or more of the preceding claims, having a particle spectrum from 25 µm to 3000 µm or, in granulated form, from 2 to 10 mm.

11. A process for preparing a vulcanizable rubber mixture, **characterized in that** rubber prepared according to one or more of the present claims is incorporated as a filler, in an amount customary for fillers, into the corresponding rubber, with the addition, if desired, of one or more further necessary, known processing aids and vulcanizing aids.

## Revendications

1. Procédé de fabrication d'une poudre de caoutchouc contenant une ou plusieurs charges oxydique(s) ou silicatique(s), en particulier un acide silicique précipité, dans une quantité de > 250 phr à 5000 phr, lorsqu'il s'agit d'une charge synthétique de ce type, ou dans une quantité > 350 phr à 5000 phr, lorsqu'il s'agit d'une charge naturelle dont la surface est modifiée pendant la fabrication avec un ou plusieurs composés organosilicés de formules générales
[R¹ ₙ(RO)₃₋ₙSi-(alk)ₘ-(Ar)ₚ]_{q}[B] (I),
R¹ ₙ(RO)₃₋ₙSi-(alkyle) (II),
ou
R¹ ₙ(RO)₃₋ₙSi-(alcényle) (III),
dans lesquelles
B représente -SCN, -SH -Cl, NH₂ (si q = 1) ou-Sx-(si q=2)
R et R¹ représentent un groupe alkyle portant 1 à 4 atomes de carbone, ramifié ou non ramifié, le radical phényle, tous les radicaux R et R¹ pouvant avoir respectivement la même signification ou une signification différente, de préférence un groupe alkyle,
n vaut 0, 1 ou 2.
Alk représente un radical hydrocarboné bivalent linéaire ou ramifié portant 1 à 6 atomes de carbone,
m vaut 0 ou 1
Ar représente un radical arylène portant 6 à 12 atomes de C,
p représente 0 ou 1 étant précisé que p, m et n ne sont pas en même temps, 0
x représente un nombre de 2 à 8,
Alkyle représente un radical hydrocarboné monovalent saturé linéaire ou ramifié portant 1 à 20 atomes de carbone, de préférence 2 à 8 atomes de carbone,
alcényle représente un radical hydrocarboné monovalent saturé linéaire ou ramifié portant 2 à 20 atomes de carbone, de préférence 2 à 8 atomes de carbone,
seules ou en combinaison avec du noir de carbone dans une quantité > 250 phr à 5000 phr, la quantité totale de charges ne dépassant pas 5000 phr.

2. Procédé de fabrication de caoutchoucs (poudres de caoutchouc) finement dispersés contenant des charges selon la revendication 1 par précipitation à partir de mélanges contenant de l'eau qui renferment, sous forme de suspensions, une émulsion aqueuse d'un caoutchouc (polymère) ou une solution de caoutchouc, par addition de sels hydrosolubles d'un métal, choisi dans les groupes II a, II b, III a et VIII de la Classification périodique des éléments,
**caractérisé en ce qu'**
a) on fabrique d'abord en agitant, à partir d'un composé silicatique seul ou en combinaison avec des noirs de carbone et de l'eau, une suspension de charge d'une densité comprise entre 0,5 et 10 %, en particulier entre 5 et 7 %, par rapport à la substance solide, éventuellement on broie (désagglomère) au préalable les particules de substance solide au moyen d'un broyeur approprié, on ajoute le cas échéant à la suspension, en supplément, des composés formant des ponts hydrogène comme des polyalcools ou des amines polyvalentes dans des quantités de 0,5 à 10 parties, par rapport à 100 parties de la charge, et le cas échéant on chauffe la suspension à des températures comprises entre 25 et 95°C ;
b) on dissout ensuite dans de l'eau un ou plusieurs composé(s) organosilicé(s) selon les formules (I) à (III), qui contiennent au moins un groupe alcoxy, ou bien on émulsifie directement ou le cas échéant en présence d'une substance tensioactive dans de l'eau, on mélange en agitant à la suspension aqueuse indiquée de cette charge ou le mélange de celle-ci avec un noir de carbone à une température de 10 à 60°C. de préférence à la température ambiante,
c) on mélange la suspension ainsi fabriquée au latex polymère, à l'émulsion polymère ou à la solution polymère, on abaisse le pH de ce mélange à une valeur de 7 à 4, de préférence comprise entre 6,5 et 4,5, avec un acide ou la solution aqueuse d'un des sels indiqués ci-dessus, en particulier un acide de Lewis et on précipite le caoutchouc se trouvant dans le mélange avec les charges éventuellement modifiées par les composés organosilicés indiqués,
d) on sépare la poudre de caoutchouc précipitée contenant des charges à l'aide de mesures connues, le cas échéant on lave sans acide,
e) on sèche la charge ainsi obtenue et, le cas échéant, on la granule.

3. Procédé selon la revendication 2,
**caractérisé en ce qu'**
à la suite de l'étape c) on ajoute au mélange réactionnel des émulsions plastiques aqueuses contenant du polystyrène, des copolymères de polystyrène et de butadiène de composition différente, des polyéthylènes, des polypropylènes ou de l'acétate de polyvinyle de constitution chimique différente dans des quantités de 0,5 à 10 phr, en particulier de 1 à 4 phr.

4. Procédé selon la revendication 2,
**caractérisé en ce qu'**
on ajuste la concentration de charges dans le mélange réactionnel à
a) > 250 phr, en particulier 400 phr à 5000 phr, lorsqu'on utilise des acides siliciques synthétiques ou le gâteau de filtration qui se forme lors de leur fabrication,
b) > 350 phr, en particulier 400 phr à 1250 phr, lorsqu'on utilise une charge silicatique naturelle même sous la forme de la suspension formée lors de la préparation ou
c) des noirs de carbone individuellement ou en mélange avec les charges précitées à > 250 à 5000 phr.

5. Procédé selon les revendications 2 à 4,
**caractérisé en ce que**
comme substances tensioactives, on utilise des tensioactifs non ionogènes, cationiques ou anioniques.

6. Procédé selon l'une quelconque ou plusieurs des revendications précédentes,
**caractérisé en ce qu'**
on ajoute à la suspension, avant l'étape de précipitation, jusqu'à 5 parties en poids d'une solution de silicate alcalin, de préférence du verre aqueux ayant un rapport Na₂O:SiO2 de 2/1 à 1/4, par rapport à 100 parties de caoutchouc.

7. Procédé selon l'une quelconque ou plusieurs des revendications précédentes,
**caractérisé en ce qu'**
on utilise des acides siliciques précipités sous forme de gâteau de filtration obtenu lors de leur fabrication.

8. Procédé selon l'une quelconque ou plusieurs des revendications précédentes,
**caractérisé en ce qu'**
on utilise des charges silicatiques préalablement modifiées pour fabriquer les suspensions selon la revendication 2, point a) avec un ou plusieurs composés organosilicés selon les formules (I) à (III).

9. Procédé selon la revendication 2,
**caractérisé en ce qu'**
on ajoute à la suspension de la charge, le cas échéant après son mélange avec le polymère (caoutchouc) mais avant l'opération de précipitation (point c) un ou plusieurs des auxiliaires de mise en oeuvre ou de vulcanisation
oxyde de zinc
stéarate de zinc.
acide stéarique,
polyalcools,
polyamines,
plastifiants,
agents anti-vieillissement contre la chaleur, la lumière ou des résines de renfort,
des agents pare-flammes (Al (OH)₃, Mg(OH)₂),
le cas échéant du soufre dans les concentrations usuelles dans le domaine du caoutchouc.

10. Caoutchouc fabriqué selon l'une quelconque ou plusieurs des revendications précédentes, qui se présente avec un spectre de grains de 25 µm à 3000 µm ou sous forme granulée de 2 à 10 mm.

11. Procédé de fabrication de mélanges de caoutchoucs vulcanisables,
**caractérisé en ce qu'**
on incorpore du caoutchouc selon l'une quelconque ou plusieurs des présentes revendications en tant que charge incorporée dans le caoutchouc correspondant dans les quantités usuelles pour les charges, le cas échéant en ajoutant d'autres auxiliaires de mise en oeuvre et de vulcanisation nécessaires connus.
